# EUROPEAN PATENT SPECIFICATION

(11) **EP 4 420 819 B1**
(45) Date of publication and mention of the grant of the patent: **11.03.2026**
(21) Application number: 22883451.1
(22) Date of filing: 12.10.2022
(51) Int. Cl.: B23K 26/00, B23K 11/24, G06N 20/00, B23K 11/25, B23K 26/03, B23K 26/21, B23K 31/12

(54) **WELDING SYSTEM AND WELDING RESULT DETERMINATION DEVICE**
SCHWEISSSYSTEM UND VORRICHTUNG ZUR BESTIMMUNG DES SCHWEISSERGEBNISSES
SYSTÈME DE SOUDAGE ET DISPOSITIF DE DÉTERMINATION DE RÉSULTAT DE SOUDAGE

(30) Priority: 19.10.2021 JP 2021171198
(43) Date of publication of application: 28.08.2024
(73) Proprietor: Amada Co., Ltd., Isehara-shi, Kanagawa 259-1196 (JP)
(72) Inventor: MATSUSHITA, Naoki, Isehara-shi, Kanagawa 259-1196 (JP); SHISHIDO, Hayato, Isehara-shi, Kanagawa 259-1196 (JP)
(74) Representative: Grünecker Patent- und Rechtsanwälte PartG mbB
(86) International application number: PCT/JP2022/038126
(87) International publication number: WO 2023/068147

(56) References cited:
- JP-A- 2017 164 801
- JP-B1- 6 818 970
- JP-B1- 6 854 984
- JP-B1- 6 854 984
- US-A1- 2017 032 281
- US-A1- 2017 032 281

## Description

### Technical Field

The present invention relates to a welding system and a welding result determination device.

### Background Art

In conventional laser welding, a technology is known in which changes in the light intensity of visible rays, infrared rays, reflected rays, and the like generated from a molten zone are measured by an optical sensor, and changes in the welding condition and weld quality are monitored by a welding monitor device on the basis of the waveform shape of time series data output from the optical sensor (see Patent Literature 1).

In this welding monitor device, for example, threshold values for the light intensity indicated by the monitored waveform shape of the time series data are preset, the joining state of metal materials is inferred according to whether the measurement values of the light intensity fall within the range from upper and lower limits of the threshold values, and the weld quality is determined to be good or defective (quality determination) .

US 2017 0032281 A1 (see the preambles of the independent claims) relates to a cloud-based weld production knowledge system in which welding machines stream process and quality data to a remote analytics platform that stores the data, applies machine-learning algorithms to detect weld defects and other characteristics. The platform's communication interface aggregates data from many geographically dispersed welding systems, while the analytics engine can also transmit control or maintenance instructions back to the equipment.

### Citation List

### Patent Literature

Patent Literature 1: Japanese Patent No. 3275988 Summary

### Technical Problem

However, in the device disclosed in Patent Literature 1 above, to make a quality determination, a worker needs to set a plurality of check items, such as threshold values, assessment of the validity of threshold values, and the range over which to check the waveform shape of time series data, through preliminary processing or on the basis of a rule of thumb. Moreover, if the processing conditions for welding change, such as when the material of the object to be machined is different, it is necessary to set the threshold values and the like again.

The invention is defined by the features of the independent claims. Any reference to inventions or embodiments not falling within the scope of the claims are to be interpreted as examples useful for understanding the invention.

One aspect of the present invention is a welding system and a welding result determination device that can make a quality determination of welding, including during welding, using feature information which contributes to a quality determination of welding and which is extracted on the basis of weld monitoring information, without requiring a worker to make a quality determination by setting a plurality of check items through preliminary processing or on the basis of a rule of thumb.

### Solution to Problem

A welding system according to one aspect of the present invention comprises:
a welding device configured to weld an object to be machined;
a welding monitor device configured to use a sensor to monitor the progress of welding by the welding device and output obtained monitoring information;
a learning device configured to accept the input of welding result information associated with welding results obtained after welding by the welding device and feature information extracted from the monitoring information at the time of welding when the welding results were obtained as teaching data, and create and output a welding result estimation model on the basis of the teaching data; and
a welding result determination device configured to extract feature information from monitoring information output from the welding monitor device at the time of welding for which a welding result is to be determined, input the feature information as data for estimation into the welding result estimation model created by the learning device, and output a quality determination result for the welding, wherein
the learning device is configured to detect the values of a preset plurality of feature elements from the monitoring information which includes time series data, calculate the contribution of the detected values of the plurality of feature elements to the welding result, and determine the feature information on the basis of the contribution calculated from the values of the plurality of feature elements.

According to the welding system as in one aspect of the present invention, welding result information associated with welding results obtained after welding by the welding device and feature information extracted from the monitoring information at the time of welding when the welding results were obtained are used as teaching data to create a welding result estimation model. Feature information is extracted from monitoring information at the time of welding for which a welding result is to be determined and input to the welding result estimation model as data for estimation, and a quality determination result for the welding is output. The values of a preset plurality of feature elements are detected from the monitoring information which includes time series data, the contribution of the value of each feature element to the welding result is calculated, and the feature information is determined on the basis of the contribution. This makes it possible to accurately make a quality determination of welding, including during welding, using feature information which contributes to a quality determination of welding and which is extracted automatically on the basis of time series data included in the welding monitoring information. This also enables the learning of a more accurate welding result estimation model and the outputting of a quality determination result that reflects monitoring information in which correlations between objective and explanatory variables are reduced as much as possible using feature information.

### Advantageous Effects of Invention

According to one aspect of the present invention, it is possible to make a quality determination of welding, including during welding, using feature information which contributes to a quality determination of welding and which is extracted on the basis of weld monitoring information, without requiring a worker to make a quality determination by setting a plurality of check items through preliminary processing or on the basis of a rule of thumb.

### Brief Description of Drawings

[Figure 1] Figure 1 is an explanatory diagram illustrating a basic configuration of a welding system according to a first embodiment of the present invention.
[Figure 2] Figure 2 is an explanatory diagram illustrating a basic hardware configuration of a learning device and/or a welding result determination device of the welding system.
[Figure 3] Figure 3 is a graph illustrating an example of time series data.
[Figure 4] Figure 4 is a diagram illustrating an example of the graph shape of time-series variation data.
[Figure 5] Figure 5 is an explanatory diagram illustrating a basic configuration of a welding system according to a second embodiment of the present invention.
[Figure 6] Figure 6 is a graph illustrating a relationship between welding temperature and elapsed time to explain an auxiliary variable in an implementation example of the welding system according to the first embodiment.
[Figure 7] Figure 7 is a chart plotting the regression error after multiple regressions of the welding temperature as a processing condition in an implementation example.
[Figure 8] Figure 8 is a graph illustrating the relationship between estimation values and measurement values and a histogram of errors in the estimation values relative to the measurement values in a comparative example and an implementation example.

### Description of Embodiments

Hereinafter, a welding system and welding result determination device according to embodiments of the present invention will be described in detail, with reference to the attached drawings. However, the following embodiments do not limit the invention as in the claims, and not all of the combinations of features described in the embodiments are essential to the solution of the invention. In the following embodiments, the arrangement, scale, dimensions, and the like of components may be illustrated in an exaggerated or undersized form, and some components may also be omitted.

### [First embodiment]

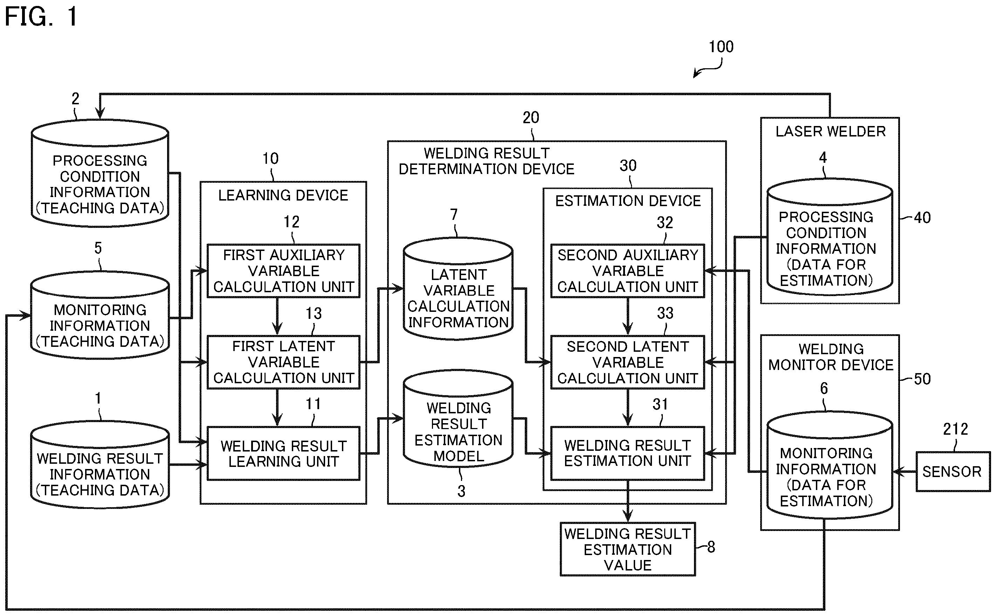

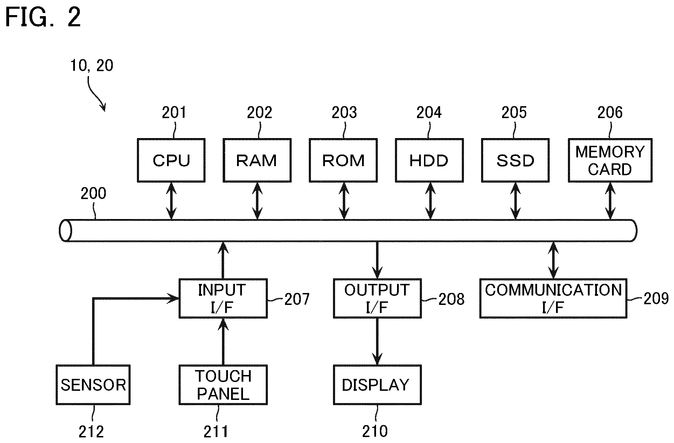

Figure 1 is an explanatory diagram illustrating a basic configuration of a welding system according to a first embodiment of the present invention. Figure 2 is an explanatory diagram illustrating a basic hardware configuration of a learning device and/or a welding result determination device of the welding system.

As illustrated in Figure **1****,** a welding system 100 according to the first embodiment may estimate a welding result of welding and output a quality determination result. The welding system 100 includes: a welding device (laser welder 40) that welds an object to be machined; and a welding monitor device 50 that uses a sensor 212 to monitor the progress of welding by the welding device (laser welder 40) and outputs obtained monitoring information **5.** The welding system 100 also includes a learning device 10 that accepts the input of welding result information 1 associated with welding results obtained after welding by the welding device (laser welder 40) and feature information (not illustrated) extracted from the monitoring information 5 at the time of welding when the welding results were obtained as teaching data, and creates and outputs a welding result estimation model 3 on the basis of the teaching data. The welding system 100 also includes a welding result determination device 20 that extracts feature information (not illustrated) from monitoring information 6 output from the welding monitor device 50 at the time of welding for which a welding result is to be determined, inputs the feature information as data for estimation into the welding result estimation model 3 created by the learning device 10, and outputs a quality determination result (welding result estimation value 8) for the welding. The learning device 10 detects the values of a preset plurality of feature elements (not illustrated) from the monitoring information 5 which includes time series data, calculates the contribution of the detected values of the plurality of feature elements to the welding result by machine learning, for example, and determines the feature information on the basis of the contribution calculated from the values of the plurality of feature elements.

The welding monitor device 50 of the welding system 100 may output monitoring information 5, 6 obtained by using the sensor 212 to monitor (state observation) the progress of welding by the laser welder 40, and refers to a device capable of using the sensor 212 to monitor a welded section of an object to be machined and acquire output information from the sensor 212 as the monitoring information 5, 6. The monitoring information 5, 6 output from the welding monitor device 50 may be information including time series data on physical quantities (such as welding temperature, sound, light, and color) observed at the time of laser welding, for example.

The welding system 100 of the first embodiment is applied to laser welding using (teaching data and data for estimation of) a latent variable that has a weaker correlation with processing condition information 2, 4 than an auxiliary variable (feature information) calculated on the basis of monitoring information 5, 6 from the welding monitor device 50. In the welding system 100, teaching data for an objective variable to be input to the learning device 10 may be the welding result information 1, for example. The welding result information 1 includes cause information from which good processing determination results of welding are derived and/or cause information from which defective processing determination results of welding are derived, for example. Cause information refers to information that is the cause (such as the presence or absence of spatter, or the presence or absence of focal position misalignment) of good or defective processing determination results. The welding result information 1 also includes information pertaining to the weld strength F (N/mm²) of a welded section in laser welding, for example. Note that weld strength is obtained by, for example, destructive testing or the like. The destructive testing or the like may be selected from any of the JIS standards which may be used for welding tests and inspections, such as JIS Z 2241 Metallic materials-Tensile testing-Method of test at room temperature and others listed as destructive tests on the website of the Welding Information Center of the Japan Welding Engineering Society. The testing and evaluation methods are also those described in the JIS standards.

Teaching data for an explanatory variable may be the processing condition information 2, which includes various processing conditions such as processing conditions (such as laser power (output value) and laser irradiation time) for good processing and processing conditions for defective processing in welding carried out previously. Note that processing condition information 4 includes processing conditions for good processing and/or defective processing set in the laser welder 40. The objective variable, explanatory variable, and auxiliary variable used in the welding system 100 are not limited to the examples given above. Note that an auxiliary variable means a variable that is auxiliary, that is, a variable other than the objective variable, which is available at the time of prediction/estimation as a variable having a causal relationship with the result that would be obtained when the explanatory variable is the cause.

More specifically, the welding device illustrated in Figure 1 is the laser welder 40. The teaching data input to the learning device 10 and the data for estimation input to the welding result determination device 20 include processing condition information 2, 4. The processing condition information **2,** 4 includes at least one of the following processing conditions: material of the object to be machined, thickness of the object to be machined, laser power, laser irradiation time, time from the start of laser irradiation until peak power is reached, time from the peak power to the end of laser irradiation, fiber diameter, lens focal length, focal position, and laser diameter of the irradiated point. The monitoring information **5,** 6 includes time-series variation data on laser power and time-series variation data on emitted near-infrared light intensity at the irradiated point.

The welding result determination device 20 of the welding system 100 of the first embodiment includes a reporting unit (not illustrated) that reports (details of) a quality determination result in at least one of a visible or audible manner. A quality determination result includes at least one of information pertaining to the weld strength of welding or cause information.

The laser welder 40 herein is a device that welds by radiating a laser beam onto an object to be machined under processing conditions specified by external input, for example. The laser welder 40 is configured to acquire various conditions under which the laser beam is radiated through various forms of communication (communication achieved by network communication or a direct connection). Also, a welding result includes the weld strength, spot diameter, weld quality, and the like. Note that weld quality and the like may be an indicator by which metal texture is evaluated according to external appearance, cross section, or the like, and may also be an indicator by which corrosion resistance is evaluated. Consequently, the welding system 100 of the first embodiment may be used as a system for estimating the weld strength included in a quality determination result for laser welding by the laser welder 40, for example. Also, since the welding result information 1 which includes a quality determination result for a welding result may also include the spot diameter above, the welding system 100 may also be used as a system for estimating the spot diameter included in a quality determination result for laser welding.

The learning device 10 includes a first auxiliary variable calculation unit 12, a first latent variable calculation unit 13, and a welding result learning unit 11. The first auxiliary variable calculation unit 12 extracts feature information from the teaching data for the monitoring information 5 output from the welding monitor device 50, and calculates the extracted feature information as teaching data for an auxiliary variable. The first latent variable calculation unit 13 calculates teaching data for a latent variable (not illustrated) that has a weaker correlation with the teaching data for the processing condition information 2 than the teaching data (feature information) for an auxiliary variable from among the teaching data for the processing condition information 2 and the teaching data (feature information) for an auxiliary variable, and outputs latent variable calculation information 7. The welding result learning unit 11 accepts the input of the teaching data for the processing condition information 2 input to the learning device 10, teaching data for the welding result information 1 associated with welding results of a welded section acquired by destructive testing for example after welding by the laser welder 40 based on the processing conditions, and the teaching data for a latent variable, performs machine learning using a predetermined machine learning algorithm, for example, and creates the welding result estimation model 3. Note that the first latent variable calculation unit 13 calculates a latent variable correlated with the monitoring information 5 and outputs latent variable calculation information 7 determined in the calculation. In the present embodiment, a latent variable is a variable that characterizes an objective variable in a manner similar to an explanatory variable, and is not observed directly but rather estimated from an observed variable (auxiliary variable). In other words, a latent variable means a variable which characterizes an observed variable and which is at least dimension-reduced or dimension-compressed from an auxiliary variable. Consequently, a latent variable is one-dimensional or two-dimensional information which is correlated with the processing condition information **2,** and in which the monitoring information 5 is dimension-reduced or dimension-compressed. Note that "correlation" is not limited to a linear relationship between a plurality of variables, and means a linear or nonlinear relationship between a plurality of variables in which a change in one of the variables entails a change in another of the variables.

In the first auxiliary variable calculation unit 12, the values of a preset plurality of feature elements to be described later are detected from the monitoring information 5 which includes time series data, the contribution of the detected values of the plurality of feature elements to the welding result is calculated by machine learning, for example, and feature information is determined on the basis of the contribution calculated from the values of the plurality of feature elements.

The welding result learning unit 11 accepts the input of the processing condition information 2 which includes processing conditions resulting in good processing and/or defective processing input to the learning device 10, the welding result information 1 which includes cause information from which each of the good processing and/or defective processing determination results is derived, and the latent variable calculated by the first latent variable calculation unit 13, and creates the welding result estimation model 3 capable of making a quality determination of welding through machine learning using a predetermined machine learning algorithm, for example. Note that the spot diameter calculated from the combination of the lens/fiber/focal position for example is used in machine learning by the welding result learning unit 11. The trained welding result estimation model 3 consists of software to be run by a computer, for example. In this example, the trained welding result estimation model 3 may be a program that, when given the input of feature information extracted from the monitoring information 6 output from the welding monitor device 50 at the time of welding for which a welding result is to be determined as data for estimation, outputs a welding result estimation value 8 indicating a quality determination result for the welding. Otherwise, the welding result estimation model 3 may be a program or the like that, when given processing condition information 4 for example as data for estimation, outputs a welding result estimation value 8 of information pertaining to weld strength, or a program or the like that, when given the monitoring information 6 as data for estimation, outputs a welding result estimation value 8 of a quality determination which includes cause information.

The learning method includes, but is not limited to, any of various algorithms such as regression, classification, clustering, discrimination, interpolation, feature extraction, and time series modeling. The welding result estimation model 3 trained by the welding result learning unit 11 includes various parameters and various formulas and/or algorithms for prediction/estimation that characterize the trained model. The learning device 10 then outputs the latent variable calculation information 7 and the welding result estimation model 3 to the welding result determination device 20.

Note that the first latent variable calculation unit 13 carries out the calculation of teaching data for a latent variable by using a predetermined algorithm, for example. The algorithm is used during machine learning and estimation in the learning device 10 and the welding result determination device 20 (estimation device 30). For example, at least one of the following can be used as the algorithm: regression analysis (RA), principal component analysis (PCA), singular value decomposition (SVD), linear discriminant analysis (LDA), independent component analysis (ICA), and Gaussian process latent variable model (GPLVM). Note that the algorithm is not limited to the above.

The latent variable calculation information 7 means various information determined in the calculation of the teaching data for a latent variable and used in the calculation of an additional latent variable in the first latent variable calculation unit 13. The latent variable calculation information 7 includes various parameters and various formulas and/or algorithms, for example. The feature information extracted by the first auxiliary variable calculation unit 12 is calculated on the basis of the monitoring information 5, and thus may be used as the teaching data for an auxiliary variable. Note that the extraction of feature information by the first auxiliary variable calculation unit 12 is described later.

On the other hand, the welding result determination device 20 accepts, from the welding monitor device 50, the input of monitoring information 6 obtained by using the sensor 212 to monitor the progress of welding by the welding device (laser welder 40) that welds an object to be machined. The welding result determination device 20 uses the welding result estimation model 3 created by using as teaching data the welding result information 1 associated with welding results obtained after welding by the welding device (laser welder 40) and feature information extracted from the monitoring information 5 at the time of welding when the welding results were obtained, and extracts feature information from the monitoring information 6 output from the welding monitor device 50 at the time of welding for which a welding result is to be determined. The welding result determination device 20 inputs the feature information to the welding result estimation model 3 as data for estimation, and outputs a quality determination result for the welding. The welding result estimation model 3 detects the values of a preset plurality of feature elements from the monitoring information 5, 6 which includes time series data, calculates the contribution of the detected values of the plurality of feature elements to the welding result, and determines feature information on the basis of the contribution calculated from the values of the plurality of feature elements. The welding result determination device 20 internally stores the latent variable calculation information 7 and the welding result estimation model 3 output from the learning device 10. The welding result determination device 20 includes an estimation device 30 and a reporting unit (not illustrated). The estimation device 30 includes a second auxiliary variable calculation unit 32, a second latent variable calculation unit 33, and a welding result estimation unit 31. The second auxiliary variable calculation unit 32 extracts feature information from the data for estimation of the monitoring information 6 output from the welding monitor device 50, and calculates the extracted feature information as data for estimation of an auxiliary variable. The second latent variable calculation unit 33 calculates data for estimation of a latent variable (not illustrated) that has a weaker correlation with the data for estimation of the processing condition information 4 than the data (feature information) for estimation of an auxiliary variable from among the data for estimation of the processing condition information 4 and the data (feature information) for estimation of an auxiliary variable. In the case where the latent variable calculation information 7 includes an algorithm, for example, the second latent variable calculation unit 33 carries out the calculation of the data for estimation of a latent variable by using the same algorithm as the algorithm used in the calculation of the teaching data for a latent variable by the first latent variable calculation unit 13 of the learning device 10. In this way, by calculating a latent variable at the time of estimation using the same algorithm as at the time of learning, estimation using the same welding result estimation model 3 is possible.

The welding result estimation unit 31 estimates a welding result of welding processing performed by the laser welder 40 from the data for estimation of the processing condition information 4 set in the laser welder 40 input to the welding result determination device 20 and the data for estimation of a latent variable on the basis of the welding result estimation model 3 stored in the welding result determination device 20, and outputs a welding result estimation value 8 indicating a quality determination. The reporting unit reports details (weld strength, cause of welding failure, and the like) of the quality determination result output by the welding result estimation unit 31 of the estimation device 30 to a user in visual or auditory form. Specifically, the welding result estimation unit 31 inputs data for estimation of the processing condition information 4 and data for estimation of a latent variable to the welding result estimation model 3, and estimates and outputs a welding result. The welding result determination device 20 may determine, for example, the weld strength and/or spot diameter (hereinafter referred to as the "weld strength and the like") on the basis of the welding result estimation value 8 output from the welding result estimation unit 31 of the estimation device 30. Note that the welding result estimation value 8 refers to information about the weld strength that may be expressed in terms of numerical values, such as the tensile strength (units: N) and strength distribution range of a certain weld point (welded section), for example. The welding result estimation value 8 also refers to information about the spot diameter that may be expressed in terms of numerical values, such as the size of the laser beam irradiation area on the surface of a certain weld point (welded section) or the size of the melted portion of the welded section, for example.

Note that information appropriate for the calculation of a latent variable by the learning device 10 and the estimation device 30 may be selected as the latent variable calculation information 7 passed from the learning device 10 side to the welding result determination device 20 side. For example, in the case where the calculation of teaching data for a latent variable in the learning device 10 is performed by principal component analysis, the latent variable parameters may be a principal component vector and an eigenvalue, and in addition to these, latent variable parameters may also be selected after excluding principal component vectors in which the contribution ratio of the teaching data for a specific auxiliary variable (monitoring information 5) is higher than a predetermined value. This allows a latent variable, which has a weaker correlation with an explanatory variable than an auxiliary variable, to be used together with the explanatory variable in teaching data and data for estimation, thereby avoiding degraded estimation accuracy caused by multicollinearity.

Also, for time series data analysis, machine learning, welding analysis and quality determination result estimation in the learning device 10 and the welding result determination device 20, various algorithms in addition to the algorithms described above can be used, such as logistic regression (LR), support vector machine (SVM), discriminant analysis (DA), random forest (RF), ranking support vector machine (ranking SVM), gradient boosting (GB), naive bayes (NB), and the k -nearest neighbor algorithm (K-NN), for example.

An algorithm of time series data analysis in the welding system 100 herein refers to a process of automatically extracting and determining feature information that serves as features of time series data (time-series variation data on laser power and time-series variation data on emitted near-infrared light intensity at the irradiated point) included in the monitoring information 5, 6 by computational processing or the like, for example. Also, an algorithm of welding analysis refers to computational processing to make a quality determination (welding failure determination) of welding by performing statistical processing, including machine learning, on the basis of feature information, for example. Note that the first latent variable calculation unit 13 may be configured to calculate one-dimensional or two-dimensional information obtained by dimension-reducing or dimension-compressing teaching data for the processing condition information 2 and teaching data (feature information) for an auxiliary variable as teaching data for latent information. Also, the second latent variable calculation unit 33 may be configured to calculate one-dimensional or two-dimensional information obtained by dimension-reducing or dimension-compressing data for estimation of the processing condition information 4 and data (feature information) for estimation of an auxiliary variable as data for estimation of latent information. In each of the teaching data for a latent variable and the data for estimation of a latent variable, an auxiliary variable, or an auxiliary variable and an explanatory variable, are dimension-reduced or dimension-compressed as above, for example, to reduce the correlation of the latent variable with the explanatory variable more than with the auxiliary variable.

In the welding system 100 of the first embodiment, the first auxiliary variable calculation unit 12 of the learning device 10 calculates teaching data (feature information) for an auxiliary variable from data including the monitoring information 5, the first latent variable calculation unit 13 calculates teaching data for a latent variable from teaching data for the processing condition information 2 and feature information, and outputs latent variable calculation information 7, and the welding result learning unit 11 accepts the input of the teaching data for the processing condition information 2, the teaching data for the welding result information 1, and teaching data for a latent variable, and creates the welding result estimation model 3 by machine learning, for example. Additionally, the second auxiliary variable calculation unit 32 of the estimation device 30 of the welding result determination device 20 calculates data (feature information) for estimation of an auxiliary variable from data including the monitoring information 6, the second latent variable calculation unit 33 calculates data for estimation of a latent variable from data for estimation of the processing condition information 4 and feature information on the basis of the latent variable calculation information 7, and the welding result estimation unit 31 outputs a welding result estimation value 8 from the data for estimation of the processing condition information 4 and the data for estimation of a latent variable on the basis of the welding result estimation model 3.

With this arrangement, by simply inputting the processing condition information 4 and the monitoring information 6 into the trained welding result estimation model 3, for example, the welding system 100 can obtain a welding result estimation value 8 indicating a quality determination associated with a welding result, obtain a welding result estimation value 8 indicating the weld strength, cause of welding failure, and the like included in the quality determination result, and report the quality determination result via the reporting unit. Consequently, the welding system 100 can make a quality determination of welding, including during welding.

Note that each piece of data of the welding result information (teaching data for an objective variable) 1 and processing condition information (teaching data for an explanatory variable) 2 in the welding system 100 may each contain one or more variables or parameters. Each piece of data may be stored in, for example, a stationary or portable storage device or storage medium not illustrated. Also, each piece of data may be transmitted and received via an information communication medium such as the Internet, for example, and may also be raw data acquired by a sensor or other measuring device not illustrated. The welding result estimation model 3 may also be input and output between the learning device 10 and the welding result determination device 20 via the above storage medium or information communication medium. The explanatory variable, objective variable, latent variable, and latent variable calculation information 7 used in the welding system 100 may each contain one or more variables or parameters. In this specification, "prediction/estimation of an objective variable" is used in the sense of "prediction of an objective variable" or "estimation of an objective variable". "Prediction of an objective variable" means assuming an objective variable that is thought to be realized in the future (time to come), while "estimation of an objective variable" means inferring an objective variable that is currently realized but cannot be observed directly.

As illustrated in Figure **2****,** the learning device 10 and/or welding result determination device 20 of the welding system 100 includes, for example, a central processing unit (CPU) 201, random access memory (RAM) 202, read-only memory (ROM) 203, a hard disk drive (HDD) 204 and/or solid-state drive 205, and a memory card 206 as a basic hardware configuration.

The learning device 10 and/or welding result determination device 20 also includes, for example, an input interface (I/F) 207, an output interface (I/F) 208, and a communication interface (I/F) 209. The components 201 to 209 are connected to each other by a bus 200.

The CPU 201 controls the learning device 10 and/or welding result determination device 20 by executing various programs stored in the RAM 202, ROM 203, HDD 204, SSD 205, and the like. In the learning device 10, the CPU 201 achieves the functions of the first auxiliary variable calculation unit 12, first latent variable calculation unit 13, and welding result learning unit 11 above by executing a learning program.

In the welding result determination device 20, the CPU 201 achieves the functions of the second auxiliary variable calculation unit 32, second latent variable calculation unit 33, and welding result estimation unit 31 of the estimation device 30 and the reporting unit above by executing a determination program. Note that the CPU 201 in each of the learning device 10 and the welding result determination device 20 may be configured to cooperate with one another to control the welding system 100 as a whole.

The RAM 202 may be used as a work area for arithmetic calculation processing by the CPU 201. The ROM 203 stores the various programs above in at least a readable way. The HDD 204 and SSD 205 store the various data described above in a readable and writable way. The memory card 206 stores the various data in a readable and writable way, and also forms a storage medium that is removable from each of the devices 10, 20. The HDD 204, SSD 205, and memory card 206 achieve the functions of the storage device or storage medium described above.

The sensor 212, for example, is connected to the input I/F 207 so that detection information is acquired. The input I/F 207 may also acquire the processing condition information 2, 4 from the laser welder 40 and the monitoring information 5, 6 from the welding monitor device 50. The sensor 212 includes any of various sensors, such as a temperature sensor, an optical sensor, an acoustic sensor, and an image sensor. Note that a touch panel 211 that functions as an operation section or input unit of the learning device 10 and/or welding result determination device 20 is connected to the input I/F 207, and the input I/F 207 accepts information associated with operating input from a user of the welding system 100. Any of various input devices, such as a keyboard and mouse (including a trackball mouse) not illustrated, may also be connected to the input I/F 207.

A display 210 that serves as a display device for example is connected to the output I/F 208, and various information to be monitored and displayed by the learning device 10 and/or welding result determination device 20 is output. The touch panel 211 may also be provided on top of the display 210. The learning device 10 and/or welding result determination device 20 may also be connected, directly or indirectly via the communication I/F 209, to a server device, external equipment, or the like connected to a network such as the Internet not illustrated.

The following describes the extraction/determination of feature information by the first auxiliary variable calculation unit 12 of the learning device 10 and the second auxiliary variable calculation unit 32 in the estimation device 30 of the welding result determination device 20.

As described above, the first and second auxiliary variable calculation units 12, 32 detect the values of a plurality of feature elements (information of some kind) from the monitoring information 5, 6 which includes time series data. The values of a plurality of feature elements are automatically pre-extracted and detected by computer processing or the like on the basis of selection conditions confirmed in advance through testing, for example. Additionally, the contribution of the detected values of the plurality of feature elements to the welding result is calculated by machine learning, for example. On the basis of the contribution calculated from the detected values of the plurality of feature elements in this way, feature information to serve as an auxiliary variable is determined and calculated as teaching data for an auxiliary variable. The plurality of feature elements are at least one of the time from the start of laser irradiation to a first inflection point at which a predetermined laser output is reached, the time from the start of laser irradiation until melting begins, the temperature at which melting begins, the time from the end of laser irradiation to a second inflection point at which the temperature starts to fall, the time from the end of laser irradiation to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during laser output. Specifically, the plurality of feature elements that can be used in the extraction/determination of feature information are assumed to be like the following, for example.

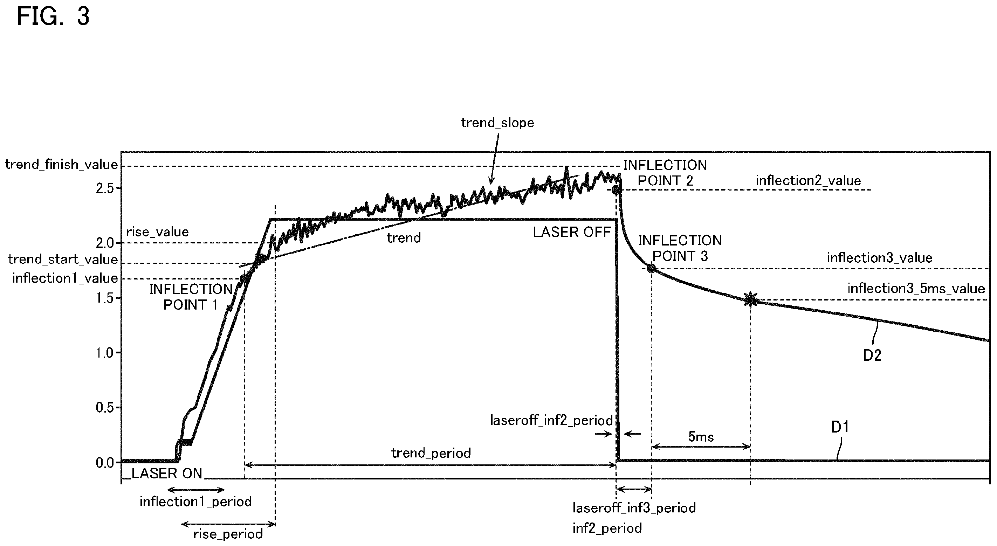

Figure 3 is a graph illustrating an example of time series data.

As illustrated in Figure 3, for example, the time series data included in the monitoring information 5, 6 may be time-series variation data D1 on laser power, time-series variation data D2 on emitted near-infrared light intensity at the irradiated point, and the like. In Figure 3, the horizontal axis represents time (seconds), the vertical axis represents temperature (×100°C), and a plurality of feature elements by which feature information in the data may be extracted/determined are illustrated.

As the values of the plurality of feature elements in Figure 3, "rise_period" is a value meaning the time from laser-on to an inflection point (predicted (70%)). The value of "rise_period" is calculated as the number of measurement points (×5 µs to obtain the time) from the time of laser-on until 70% of the measurement value is reached at the laser rise completion time point.

Also, "inflection1_period" is a value meaning the time from laser-on until melting begins. The value of "inflection1_period" is calculated as the number of measurement points (×5 µs to obtain the time) from the time of laser-on to an inflection point 1 at laser rise completion. Also, "rise _value" is a value meaning an inflection point (predicted (70%)). The value of "rise _value" is calculated as the value of 70% of the measurement value at the laser rise completion time. Also, "inflection1_value" is a value meaning the temperature at which melting begins (melting point). The value of "inflection1_value" is calculated as the measurement value at the inflection point 1.

Also, "inflection3_value" is a value meaning the temperature at which solidification begins (melting point). The value of "inflection3_value" is calculated as the measurement value at an inflection point 3 where solidification starts after the laser is stopped. Also, "laseroff_inf3_period" is a value meaning the time from laser-off until solidification begins. The value of "laseroff_inf3_period" is calculated as the number of measurement points (×5 µs to obtain the time) from laser-off to the inflection point 3. Also, "inflection3_5ms_value" is a value meaning the first 5 ms of solidification (speed of cooling (hardness of solidified metal) × (relationship with molten volume)). The value of "inflection3_5ms_value" is calculated as the measurement value after 5 ms elapses from the inflection point 3.

Also, "inflection2_value" is a value meaning the temperature at which the temperature starts to fall. The value of "inflection2_value" is calculated as the measurement value at an inflection point 2 where the measurement value starts to fall after laser-off. Also, "inf2_inf3_period" is a value meaning the time from when the temperature starts to fall until solidification begins. The value of "inf2_inf3_period" is calculated as the number of measurement points (×5 µs to obtain the time) from the inflection point 2 to the inflection point 3. Also, "laseroff_inf2_period" is a value meaning the time from laser-off until the temperature starts to fall. The value of "laseroff_inf2_period" is calculated as the number of measurement points (×5 µs to obtain the time) from laser-off to the inflection point 2.

Also, "trend _start_value" means the first value (minimum) of the interval of a regression line. The value of "trend _start_value" is calculated as the value at the time of the inflection point 1 of a first-order regression equation for measurement values in the period from the time of the inflection point 1 to the time of the inflection point 2 (hereinafter referred to as the "specified period"). Also, "trend _finish_value" means the last value (maximum) of the interval of the regression line. The value of "trend _finish_value" is calculated as the value at the time of the inflection point 2 of the first-order regression equation for measurement values in the specified period. Also, "trend_period" is a value meaning the time (time calculated) from when melting begins until the temperature starts to fall. The value of "trend_period" is calculated as the time (µs) of the specified period. Also, "trend_slope" is a value meaning the rate of temperature rise during melting. The value of "trend_slope" is calculated as the slope of the first-order regression equation for measurement values in the specified period.

Otherwise, although omitted from illustration in Figure 3, the plurality of feature elements may include "rise _value_sum", "laserontime_value_sum", "count", "mean", "std", "min", "25%", "50%", "75%", "max", "dence1-5", and the like. Here, "rise _value_sum" is a value meaning the total temperature of the rise. The value of "rise _value_sum" is calculated by integrating the measurement values in the period from the time of laser-on to "rise_period". Also, "laserontime_value_sum" is a value meaning the total temperature during laser output. The value of "laserontime_value_sum" is calculated by integrating the measurement values in the period from laser-on to laser-off.

Also, "count" is a value meaning the time from when melting begins until the temperature starts to fall. The value of "count" is calculated as the number of measurement points (×5 µs to obtain the time) in the specified period. Also, "mean" is a value meaning the degree of deviation (degree of waviness) from the linear trend. The value of "mean" is calculated as the average of measurement values excluding the linear trend (first-order regression) in the specified period. Also, "std" is a value like "mean" meaning the degree of deviation (degree of waviness) from the linear trend. The value of "std" is calculated as the standard deviation of measurement values in the specified period.

Also, "min" is a value meaning the minimum temperature during melting. The value of "min" is calculated as the minimum value of measurement values in the specified period. Also, "25%" means the measurement value that is 25/100th place in ascending order. The value of "25%" is calculated as the 25th percentile of measurement values in the specified period. Also, "50%" means the measurement value that is 50/100th place in ascending order. The value of "50%" is calculated as the 50th percentile of measurement values in the specified period. Also, "75%" means the measurement value that is 75/100th place in ascending order. The value of "75%" is calculated as the 75th percentile of measurement values in the specified period. Also, "max" is a value meaning the maximum temperature during melting. The value of "max" is calculated as the maximum value of measurement values in the specified period.

Also, "dence1" is a value meaning the (coarse) degree of temperature variation (jaggedness) based on the time-series variation data D2. The value of "dence1" is calculated as the spectral density from 195 Hz to 585 Hz (sum of the spectral densities of three given frequencies). Also, "dence2" is a value meaning the (somewhat coarse) degree of temperature variation (jaggedness) based on the time-series variation data D2. The value of "dence2" is calculated as the spectral density from 781 Hz to 1171 Hz (sum of the spectral densities of three given frequencies).

Also, "dence3" is a value meaning the (moderate) degree of temperature variation (jaggedness) based on the time-series variation data D2. The value of "dence3" is calculated as the spectral density from 1367 Hz to 1757 Hz (sum of the spectral densities of three given frequencies). Also, "dence4" is a value meaning the (somewhat fine) degree of temperature variation (jaggedness) based on the time-series variation data D2. The value of "dence4" is calculated as the spectral density from 1953 Hz to 2343 Hz (sum of the spectral densities of three given frequencies). Also, "dence5" is a value meaning the (fine) degree of temperature variation (jaggedness) based on the time-series variation data D2. The value of "dence5" is calculated as the spectral density from 2539 Hz to 2929 Hz (sum of the spectral densities of three given frequencies).

The first auxiliary variable calculation unit 12 and the second auxiliary variable calculation unit 32 detect the values of a plurality of feature elements extracted automatically, for example, from a plurality of feature elements like the above, calculate the contribution to the welding result, and determine/calculate feature information on the basis of the contribution calculated from the values of the plurality of feature elements, but are not limited thereto. For example, the first auxiliary variable calculation unit 12 may also be configured to detect the values of a plurality of feature elements extracted automatically on the basis of the magnitude of the contribution to the estimation of an objective variable. The contribution is weighted as the contribution to the estimation of various physical phenomena related to weld quality, such as spatter and porosity, for example, for a plurality of feature elements included in the time series data of the teaching data for the monitoring information 5, the weighting being performed according to the machine learning algorithm used at the time of the creation of the welding result estimation model 3 by the welding result learning unit 11. The first auxiliary variable calculation unit 12 may also be configured to detect the values of a plurality of feature elements extracted automatically on the basis of the contribution, and calculate the values as feature information. Consequently, in the welding system 100, as described above, the graph shape formed by the processing conditions for good processing of welding (processing condition information **2,** 4) and an auxiliary variable (monitoring information **5,** 6) of the processing result, or the processing conditions for defective processing of welding (processing condition information **2,** 4) and an auxiliary variable (monitoring information 5, 6) of the processing result may be teaching data. Since the monitoring information **5,** 6 may include laser beam-related information generated from the weld point (time-series variation data D1 on the laser power actually irradiated, time-series variation data D2 on the emitted near-infrared light intensity at the irradiated point), when this information is treated as an objective variable, processing condition information **2,** 4 about each of the processing conditions, laser beam profile information, machine specification information about the laser welder 40, and the like can also be treated as a latent variable.

Additionally, when feature information extracted from the monitoring information 6 at the time of laser welding for which a welding result is to be determined and data for estimation representing other processing states from the laser welder 40 is input to the welding result estimation model 3 that has been trained by an algorithm for time series data analysis of the welding system 100 using processing condition information 2 (teaching data for an explanatory variable), welding result information 1 (teaching data for an objective variable), monitoring information 5 (teaching data for an auxiliary variable), and teaching data for a latent variable, the welding result estimation model 3 may output, on the basis of the input data, a latent variable that appears to differ from the graph shape of the laser beam-related information serving as an objective variable.

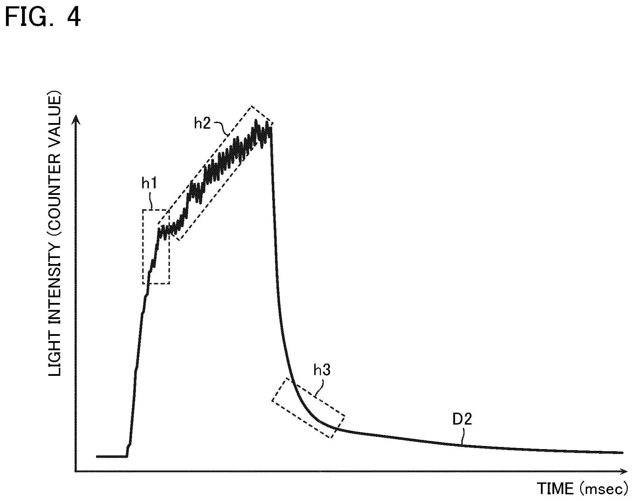

Figure 4 is a diagram illustrating an example of the graph shape of time-series variation data.

The time-series variation data D2 on emitted near-infrared light intensity at the irradiated point included in the laser beam-related information output as above is like that illustrated in Figure 4, for example. In Figure 4, the horizontal axis represents time (msec) and the vertical axis represents light intensity (counter value).

The latent variable results output from the welding result estimation model 3 are shapes representing the feature elements included in feature waveform intervals h1, h2, h3 identified by the dashed lines in the graph shape illustrated in Figure 4, which are the values of a plurality of feature elements automatically extracted and determined. The first auxiliary variable calculation unit 12 and the second auxiliary variable calculation unit 32 calculate feature information using the contribution calculated from these values of the plurality of feature elements. The feature waveform intervals h1-h3 include feature elements representing the features (jaggedness, inflection points, and the like) of waveform shapes in the time-series variation data D2. Note that in the welding analysis algorithm of the welding system 100, various information included in the identified feature waveform intervals h1-h3 and the laser beam-related information obtained from the monitoring information 6 are statistically processed, for example, to automatically detect welding abnormalities (insufficient weld strength, cause of welding failure, etc.), and a welding result estimation value 8 representing a quality determination result is output and reported to a user, for example.

The welding system 100 of the first embodiment can calculate a latent variable from data including monitoring information 5 (time-series variation data D1, D2 and feature information) to train the welding result estimation model 3 of quality determination, and make a quality determination of welding from the latent variable along with processing condition information 4 and monitoring information 6 on the basis of the welding result estimation model **3.** Consequently, the welding system 100 makes it possible to predict/estimate weld strength and the cause of welding failure easily and accurately with a simple configuration, including during welding, while preventing degradation of estimation accuracy due to correlation.

In the case of determining the cause of welding failure in particular, the welding system 100 trains the welding result estimation model 3 using welding result information **1,** which includes cause information representing spatter generation and focal position misalignment as teaching data for an objective variable, along with teaching data for an explanatory variable (processing condition information 2) and teaching data for an auxiliary variable (monitoring information 5) as classification category information. Additionally, the welding system 100 may be configured such that if data for determination of an explanatory variable (processing condition information 4) and data for determination of an auxiliary variable (monitoring information 6) are input to the welding result estimation model **3,** the welding result estimation model 3 can output the cause of welding failure (welding result information 1) upon returning an assessment result that the classification category for a certain cause of welding failure is applicable.

### [Operation of welding system]

In the welding system 100, the welding result information 1 and processing condition information 2 stored in an external storage device or storage medium, for example, and the monitoring information 5 output from the welding monitor device 50 are input to the learning device 10 and stored in a storage unit not illustrated as teaching data for an objective variable, teaching data for an explanatory variable, and teaching data for an auxiliary variable, respectively, for example.

In the first auxiliary variable calculation unit 12, the learning device 10 calculates feature information (teaching data for an auxiliary variable) from data including the teaching data for the monitoring information 5 from the welding monitor device 50 from among the inputted data. Also, in the first latent variable calculation unit 13, the learning device 10 calculates teaching data for a latent variable that has a weaker correlation with the teaching data for the processing condition information 2 than the feature information from the feature information calculated by the first auxiliary variable calculation unit 12 and the teaching data for the processing condition information 2, and outputs latent variable calculation information 7.

Also, in the welding result learning unit 11, the learning device 10 accepts the input of teaching data for the welding result information 1, teaching data for the processing condition information 2, and the teaching data for a latent variable calculated by the first latent variable calculation unit 13, performs machine learning, for example, and creates the welding result estimation model 3 for making a weld quality determination. The learning device 10 stores the latent variable calculation information 7 determined in the calculation of the teaching data for a latent variable and the created welding result estimation model 3 in an internal storage unit of the device, and outputs the latent variable calculation information 7 and the welding result estimation model 3 for available use in the estimation device 30 of the welding result determination device 20.

Note that the learning device 10 may also be configured to output the latent variable calculation information 7 and the welding result estimation model 3 to an external storage device (not illustrated) via a connected network, and the like, for example. In this case, the external storage device temporarily or permanently stores the inputted latent variable calculation information 7 and welding result estimation model 3. Note that various data may also be stored in a storage device (not illustrated) that forms a portion of the welding system 100 for example, rather than in an external storage device or storage medium as above.

On the other hand, in the laser welder 40, laser welding is performed on the basis of set processing condition information 4. Monitoring information 6, which is state observation information at the time of laser welding of an estimation target (for example, a welded section of an object to be machined), is acquired by the welding monitor device 50 through the sensor 212 attached to the laser welder 40. The processing condition information 4 set in the laser welder 40 and the monitoring information 6 of the welding monitor device 50 is input to the welding result determination device 20 as data for estimation of an explanatory variable and data for estimation of an auxiliary variable, respectively.

The welding result determination device 20 stores various data input along with the latent variable calculation information 7 and the welding result estimation model 3 in a storage unit not illustrated. Also, in the estimation device 30, the welding result determination device 20 calculates feature information (data for estimation of an auxiliary variable) by the second auxiliary variable calculation unit 32 from data including data for estimation of the monitoring information 6 from the welding monitor device 50. Also, in the second latent variable calculation unit 33, the welding result determination device 20 calculates data for estimation of a latent variable that has a weaker correlation with the data for estimation of the processing condition information 4 than the feature information, on the basis of the latent variable calculation information 7, from the feature information calculated by the second auxiliary variable calculation unit 32 and the data for estimation of the processing condition information 4 set in the laser welder 40.

Also, in the welding result estimation unit 31, the estimation device 30 of the welding result determination device 20 outputs a welding result estimation value 8 for determining the quality of welding from the data for estimation of a latent variable calculated by the second latent variable calculation unit 33 and the data for estimation of the processing condition information 4 on the basis of the welding result estimation model **3.** The welding result estimation value 8 is stored in a storage unit and output from the estimation device 30 in an appropriately usable form, such as by being displayed, being printed, and may be used in the welding result determination device 20.

Note that in the calculation of feature information, the calculation of a latent variable, and the creation of the welding result estimation model 3, the learning device 10 may be configured such that the data for estimation of the processing condition information 4 set in the laser welder 40 and the data for estimation of the monitoring information 6 from the welding monitor device 50 is added to the teaching data for the processing condition information 2 and the teaching data for the monitoring information 5, as appropriate, as teaching data for an explanatory variable and an auxiliary variable, or is referenced and used as teaching data for an explanatory variable and an auxiliary variable. This allows for more data to be used to contribute to improved estimation accuracy.

In the welding system 100 of the first embodiment, feature information and a latent variable based on the monitoring information 5, 6 are calculated as teaching data for an auxiliary variable of the welding result information 1, and then the welding result estimation model 3 using this information is created. In addition, feature information and a latent variable is recalculated on the basis of the monitoring information 6 as data for estimation of an auxiliary variable using the latent variable calculation information 7, and then a welding result estimation value 8 for quality determination of welding is output from these information and the processing condition information 4 which is data for estimation of an explanatory variable, on the basis of the welding result estimation model 3.

Consequently, according to the welding system 100 of the first embodiment, feature information that contributes to a non-destructive quality determination of the welding of an estimation target (welded section of an object to be machined) can be extracted automatically and used to make a quality determination from not only data pertaining to the processing conditions of laser welding but also data observed through monitoring at the time of welding. With this arrangement, the welding system 100 can make a quality determination of welding, including during welding, and can also estimate the weld strength and the cause of welding failure.

Generally, in laser welding, even when laser welding is performed under the same processing conditions, the weld strength varies depending on factors such as the material of the object to be machined and variations in the welding environment. Consequently, there is a problem in that the weld strength cannot be measured without actually destroying the product. Another problem is that without actually performing laser beam irradiation experiments, it is impossible to know the various processing conditions for obtaining the intended welding result and what was the cause of welding failure.

However, the welding system 100 of the first embodiment adopts a configuration wherein feature information from monitoring information is used as an auxiliary variable and features that contribute to a quality determination are extracted automatically, making it possible to make a quality determination accounting for variations in welding conditions due to welding-induced physical phenomena as events that occurred during welding, while also improving determination accuracy. Consequently, the welding system 100 can address problems like the above. Moreover, the welding system 100 uses a latent variable to enable more precise estimation and thereby attain improved estimation accuracy and avoid accuracy degradation due to correlation.

Note that the welding system 100 of the first embodiment is intended for, but not limited to, making a weld quality determination of laser welding. When a physical phenomenon related to welding failure occurs, such as spatter or porosity, for example, the welding system 100 can also obtain details (such as which feature element acted in what way as a cause) representing the cause (cause information) of the physical phenomenon. Therefore, the welding system 100 can also estimate the weld quality associated with a welding result of welding based on various physical phenomena related to weld quality, such as spatter and porosity. Data related to weld quality includes at least one of data indicating good welding or data indicating welding failure, for example, and machine learning for example is performed in the learning device 10 to create the welding result estimation model 3 by using processing condition information 2 and monitoring information 5 at the time as teaching data for an explanatory variable and an auxiliary variable. By using the welding result estimation model 3 to make an estimation based on data for estimation of the processing condition information 4 and monitoring information 6 in the estimation device 30, the welding system 100 can estimate a welding result that includes whether welding is good or defective, including during laser welding.

Also, in the welding system 100, the learning device 10 and the welding result determination device 20 can each be installed centrally at the same site as the installation location of the laser welder 40 or separately at a remote site, for example. This allows for a wide variety of operations with respect to quality determination of laser welding, and also anticipates global deployment.

### [Second embodiment]

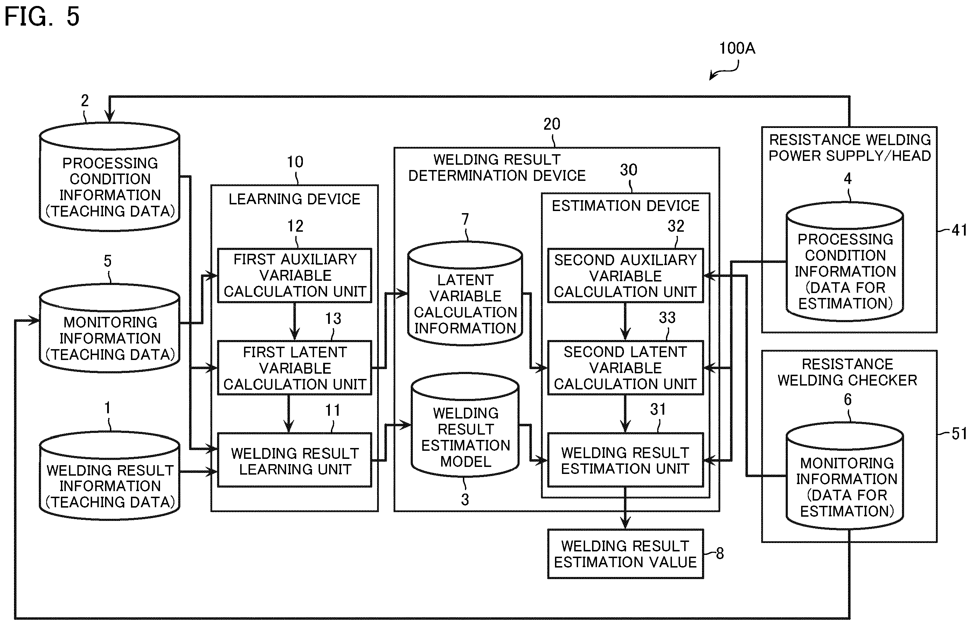

Figure 5 is an explanatory diagram illustrating a basic configuration of a welding system according to a second embodiment of the present invention. As illustrated in Figure 5, a welding system 100A according to the second embodiment is similar to the welding system 100 of the first embodiment in that monitoring information 5, 6 from a welding monitor device (resistance welding checker) 51 is used as a (teaching data and data for estimation of) an auxiliary variable correlated with the processing condition information 2, 4, but the welding system 100A according to the second embodiment differs from the welding system 100 of the first embodiment by being applied to resistance welding.

In other words, in the welding system 100A of the second embodiment, the welding device is a resistance welder (resistance welding power supply/head 41). Also, the teaching data input to the learning device 10 and the data for estimation input to the welding result determination device 20 include processing condition information 2, 4. The processing condition information 2, 4 includes at least one of the following processing conditions: welding current, applied welding pressure, energization time, welding method, material of object to be machined, thickness of object to be machined, surface treatment of object to be machined, assembly conditions of object to be machined, sampling cycle, displacement detection resolution, and nugget diameter. The monitoring information 5, 6 includes time-series variation data on welding current/voltage and time-series variation data on applied pressure/displacement of the weld point. The plurality of feature elements are at least one of the time from the start of energization to a first inflection point at which a predetermined welding current/voltage is reached, the time from the start of energization until fusion begins, the temperature at which fusion begins, the time from the end of energization to a second inflection point at which the temperature starts to fall, the time from the end of energization to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during energization.

Likewise in the welding system 100A of the second embodiment, the first auxiliary variable calculation unit 12 of the learning device 10 calculates feature information (teaching data for an auxiliary variable) on the basis of the monitoring information 5, the first latent variable calculation unit 13 calculates teaching data for a latent variable on the basis of the feature information, the welding result learning unit 11 trains the welding result estimation model 3, and the welding result estimation model 3 and latent variable calculation information 7 are given to the estimation device 30 of the welding result determination device 20. The second auxiliary variable calculation unit 32 of the estimation device 30 of the welding result determination device 20 calculates feature information (data for estimation of an auxiliary variable) on the basis of the monitoring information 6, the second latent variable calculation unit 33 calculates data for estimation of a latent variable from the feature information and data for estimation of the processing condition information 4 on the basis of the latent variable calculation information 7, and data including this data for estimation of a latent variable is input to the welding result estimation unit 31 to make a quality determination of welding on the basis of the welding result estimation model 3. Additionally, a welding result regarding weld strength and the cause of welding failure included in the welding result estimation value 8 of the obtained quality determination result can be determined, including during welding. In this way, advantageous effects similar to those of the welding system 100 of the first embodiment can also be exhibited in the welding system 100A of the second embodiment.

### [Implementation example]

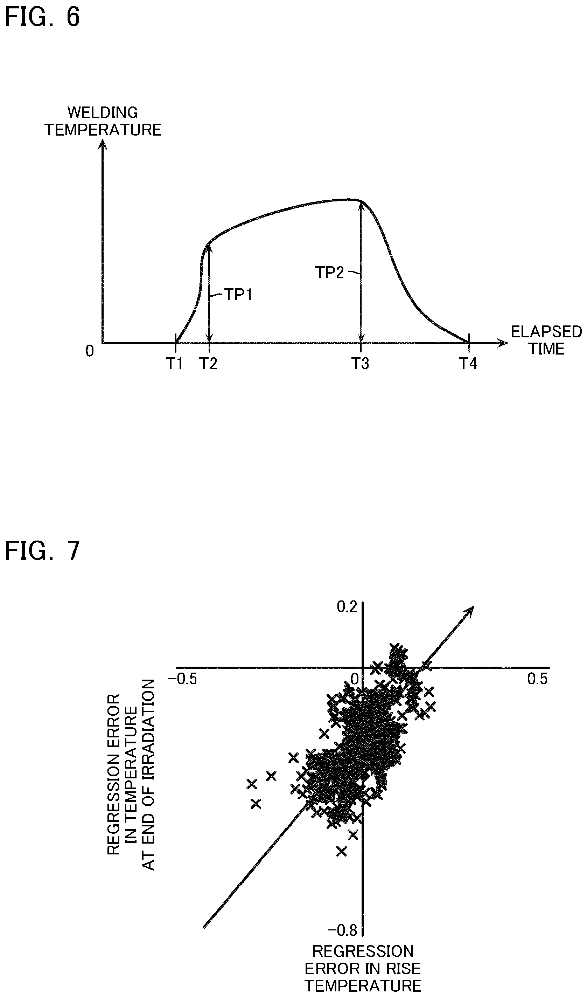

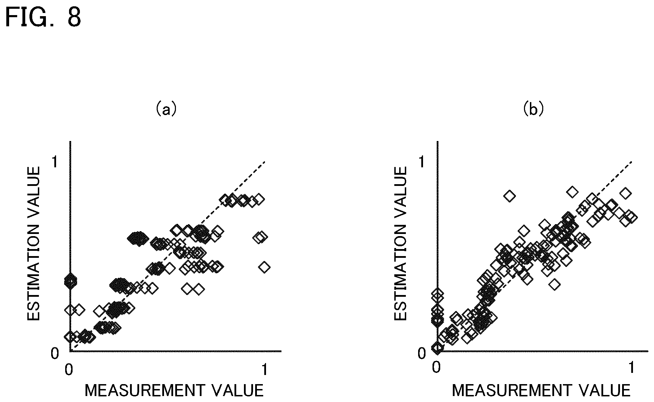

Figure 6 is a graph illustrating a relationship between welding temperature and elapsed time to explain an auxiliary variable in an implementation example of the welding system according to the first embodiment. Figure 7 is a chart plotting the regression error after multiple regressions of the welding temperature as a processing condition in an implementation example. Figure 8 is a graph illustrating the relationship between estimation values and measurement values and a histogram of errors in the estimation values relative to the measurement values in a comparative example and an implementation example.

In the laser welding of the implementation example, the processing conditions as an explanatory variable are welding conditions (output intensity and irradiation time of the laser used for laser welding), and the objective variable is the weld strength. In the learning device 10, multiple regression analysis is used to create the welding result estimation model 3. In the comparative example, a latent variable as described above is not used.

As illustrated in Figure 6, according to the graph showing the welding temperature at the weld point of laser welding on the vertical axis and the elapsed time of laser welding on the horizontal axis, the temperature at the weld point starts to increase rapidly at the same time as the start of laser irradiation at elapsed time T1. At a certain time point (elapsed time T2) after elapsed time T1, the temperature rise slows down, and then drops sharply at the same time as the end of laser irradiation (elapsed time T3) after elapsed time T2, returning to the temperature before the start of laser irradiation at a certain time point (elapsed time T4) after elapsed time T3. The welding temperature of laser welding transitions with such characteristics. Accordingly, the temperature TP1 at the time point (elapsed time T2) when the temperature rise slowed down and the temperature TP2 at the end of laser irradiation (elapsed time T3) are used as auxiliary variables for estimating weld strength.

As illustrated in Figure 7, the regression error after multiple regressions of the temperature TP1, that is, the temperature of the rise, is plotted according to the welding conditions (output intensity and irradiation time of the laser used for laser welding) on the horizontal axis, and the regression error after multiple regressions of the temperature TP2, that is, the temperature at the end of laser irradiation, is plotted according to the same welding conditions as above on the vertical axis, and principal component analysis is performed on the obtained data. This results in a one-dimensional latent variable that is dimension-reduced along a projection axis PA of the first principal component.

Estimation values of weld strength and measurement values of actual weld strength according to the comparative example are as illustrated in Figure 8(a). On the other hand, estimation values of weld strength and measurement values of actual weld strength according to the implementation example with multiple regression analysis applied to the obtained latent variable in addition to the explanatory variable are as illustrated in Figure 8(b). Note that in Figures 8(a) and 8(b), the horizontal axis represents the measurement value of weld strength for values of the welding conditions under various conditions, and the vertical axis represents the estimation value of weld strength corresponding to the welding conditions. Also, in Figures 8(a) and 8(b), both the measurement values and the estimation values are normalized and plotted so that the maximum weld strength is 1.

The results of evaluating the error according to the comparative example and the error according to the implementation example in terms of mean absolute error (MAE) and root-mean-square error (RMSE) are shown in Table 1 below.

**[Table 1]**

| | MAE | RMSE |
|---|---|---|
| Comparative Example | 0.111 | 0. 156 |
| Implementation Example | 0. 090 | 0**.**118 |

The error according to the implementation example takes smaller values for both the MAE and the RMSE compared to the error according to the comparative example. In this way, as Figure 8 and Table 1 demonstrate, it can be understood that using a latent variable has the effect of bringing the estimation values closer to the measurement values. Therefore, this proves that in the welding system of the implementation example, the accuracy of determination is improved by using more data, including auxiliary and latent variables.

## Claims

1. A welding system (100) comprising:
a laser welder (40) configured to weld an object to be machined;
a sensor (212);
a welding monitor device (50) configured to use the sensor (212) to monitor the progress of welding by the laser welder(40) and output obtained first monitoring information (5) and second monitoring information;
a learning device (10) configured to accept the input of welding result information (1) associated with welding results obtained after welding by the laser welder (40) and feature information extracted from the first monitoring information (5) at the time of welding when the welding results were obtained as teaching data, and create and output a welding result estimation model (3) on the basis of the teaching data; and
a welding result determination device (20) configured to extract feature information from the second monitoring information (6) output from the welding monitor device (50) at the time of welding for which a welding result is to be determined, input the feature information as data for estimation into the welding result estimation model (3) created by the learning device (10), and output a quality determination result for the welding,
whereby the learning device (10) is configured to detect the values of a preset plurality of feature elements from the first monitoring information (5) which includes time series data, calculate the contribution of the detected values of the plurality of feature elements to the welding result, and extract and determine the feature information from the plurality of feature elements on the basis of the contribution calculated from the values of the plurality of feature elements, and **characterized in that**
the plurality of feature elements are at least one of the time from the start of laser irradiation to a first inflection point at which a predetermined laser output is reached, the time from the start of laser irradiation until melting begins, the temperature at which melting begins, the time from the end of laser irradiation to a second inflection point at which the temperature starts to fall, the time from the end of laser irradiation to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during laser output.

2. A welding system (100A) comprising:
a resistance welder (41) configured to weld an object to be machined;
a sensor (212);
a welding monitor device (51) configured to use the sensor (212) to monitor the progress of welding by the resistance welder (41) and output obtained first monitoring information (5) and second monitoring information (6);
a learning device (10) configured to accept the input of welding result information (1) associated with welding results obtained after welding by the resistance welder (41) and feature information extracted from the first monitoring information (5) at the time of welding when the welding results were obtained as teaching data, and create and output a welding result estimation model (3) on the basis of the teaching data; and
a welding result determination device (20) configured to extract feature information from the second monitoring information (6) output from the welding monitor device (51) at the time of welding for which a welding result is to be determined, input the feature information as data for estimation into the welding result estimation model (3) created by the learning device (10), and output a quality determination result for the welding,
whereby the learning device (10) is configured to detect the values of a preset plurality of feature elements from the first monitoring information (5) which includes time series data, calculate the contribution of the detected values of the plurality of feature elements to the welding result, and extract and determine the feature information from the plurality of feature elements on the basis of the contribution calculated from the values of the plurality of feature elements, and **characterized in that**
the plurality of feature elements are at least one of the time from the start of energization to a first inflection point at which a predetermined welding current/voltage is reached, the time from the start of energization until fusion begins, the temperature at which fusion begins, the time from the end of energization to a second inflection point at which the temperature starts to fall, the time from the end of energization to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during energization.

3. The welding system (100, 100A) according to claim 1 or 2, wherein
the welding result determination device (20) includes a reporting unit configured to report the quality determination result in at least one of a visible or audible manner, and
the quality determination result includes at least one of information pertaining to the weld strength of the welding or cause information.

4. The welding system (100) according to claim 1, wherein
the teaching data input to the learning device (10) and the data for estimation input to the welding result determination device (20) include processing condition information (2, 4),
the processing condition information (2, 4) includes at least one of the following processing conditions: material of the object to be machined, thickness of the object to be machined, laser power, laser irradiation time, time from the start of laser irradiation until peak power is reached, time from the peak power to the end of laser irradiation, fiber diameter, lens focal length, focal position, and laser diameter of the irradiated point, and
the monitoring information (5, 6) includes timeseries variation data on laser power and time-series variation data on emitted near-infrared light intensity at the irradiated point.

5. The welding system (100A) according to claim 2, wherein
the teaching data input to the learning device (10) and the data for estimation input to the welding result determination device (20) include processing condition information (2, 4),
the processing condition information (2, 4) includes at least one of the following processing conditions: welding current, applied welding pressure, energization time, welding method, material of object to be machined, thickness of object to be machined, surface treatment of object to be machined, assembly conditions of object to be machined, sampling cycle, displacement detection resolution, and nugget diameter, and
the monitoring information (5, 6) includes timeseries variation data on welding current/voltage and time-series variation data on applied pressure/displacement of the weld point.

6. A welding result determination device (20) configured to:
accept, from a welding monitor device (50), the input of first monitoring information (5) obtained by using a sensor (212) to monitor the progress of welding by a laser welder (40) configured to weld an object to be machined;
use a welding result estimation model (3) created by using welding result information associated with welding results obtained after welding by the laser welder (40) and feature information extracted from the first monitoring information (5) at the time of welding when the welding results were obtained as teaching data; and
extract feature information from the second monitoring information (6) output from the welding monitor device (50) at the time of welding for which a welding result is to be determined, input the feature information as data for estimation into the welding result estimation model (3), and output a quality determination result for the welding,
whereby the welding result estimation model (3) is configured to detect the values of a preset plurality of feature elements from the first and second monitoring information (5, 6) which includes time series data, calculate the contribution of the detected values of the plurality of feature elements to the welding result, and extract and determine the feature information from the plurality of feature elements on the basis of the contribution calculated from the values of the plurality of feature elements, and **characterized in that**
the plurality of feature elements are at least one of the time from the start of laser irradiation to a first inflection point at which a predetermined laser output is reached, the time from the start of laser irradiation until melting begins, the temperature at which melting begins, the time from the end of laser irradiation to a second inflection point at which the temperature starts to fall, the time from the end of laser irradiation to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during laser output.

7. A welding result determination device (20) configured to:
accept, from a welding monitor device (51), the input of first monitoring information (5) obtained by using a sensor (212) to monitor the progress of welding by a resistance welder (41) configured to weld an object to be machined;
use a welding result estimation model (3) created by using welding result information associated with welding results obtained after welding by the resistance welder (41) and feature information extracted from the first monitoring information (5) at the time of welding when the welding results were obtained as teaching data; and
extract feature information from the second monitoring information (6) output from the welding monitor device (51) at the time of welding for which a welding result is to be determined, input the feature information as data for estimation into the welding result estimation model (3), and output a quality determination result for the welding,
whereby the welding result estimation model (3) is configured to detect the values of a preset plurality of feature elements from the first and second monitoring information (5, 6) which includes time series data, calculate the contribution of the detected values of the plurality of feature elements to the welding result, and extract and determine the feature information from the plurality of feature elements on the basis of the contribution calculated from the values of the plurality of feature elements, and **characterized in that**
the plurality of feature elements are at least one of the time from the start of energization to a first inflection point at which a predetermined welding current/voltage is reached, the time from the start of energization until fusion begins, the temperature at which fusion begins, the time from the end of energization to a second inflection point at which the temperature starts to fall, the time from the end of energization to a third inflection point at which solidification begins, the temperature at which solidification begins, the time from the first inflection point to the second inflection point, the temperature gradient from the first inflection point to the second inflection point, the time from the second inflection point to the third inflection point, the temperature gradient from the second inflection point to the third inflection point, and the total temperature during energization.

## Patentansprüche

1. Schweißsystem (100) mit:
einem Laserschweißgerät (40), das zum Schweißen eines zu bearbeitenden Objekts ausgebildet ist;
einem Sensor (212);
einer Schweißüberwachungsvorrichtung (50), die zum Verwenden des Sensors (212) zum Überwachen des Fortschritts des Schweißens durch das Laserschweißgerät (40) und zum Ausgeben einer ersten Überwachungsinformation (5) und einer zweiten Überwachungsinformation ausgebildet ist;
einer Lernvorrichtung (10), das ausgebildet ist, die Eingabe einer Schweißergebnisinformation (1), die mit nach dem Schweißen durch das Laserschweißgerät (40) erhaltenen Schweißergebnissen im Zusammenhang steht, und einer Merkmalsinformation, die aus der ersten Überwachungsinformation (5) zum Zeitpunkt des Schweißens beim Erhalten der Schweißergebnisse extrahiert wird, als Lehrdaten zu erhalten und auf der Grundlage der Lehrdaten ein Schweißergebnis-Schätzmodell (3) erstellt und ausgibt; und
einer Schweißergebnis-Bestimmungsvorrichtung (20), die ausgebildet ist, Merkmalsinformation aus der zweiten Überwachungsinformation (6), die von der Schweißüberwachungsvorrichtung (50) zum Zeitpunkt des Schweißens ausgegeben wird, für das ein Schweißergebnis zu bestimmen ist, zu extrahieren, die Merkmalsinformation als Daten für die Schätzung in das von der Lernvorrichtung (10) erstellte Schweißergebnis-Schätzmodell (3) einzugeben und ein Qualitätsbestimmungsergebnis für das Schweißen auszugeben, wobei die Lernvorrichtung (10) ausgebildet ist, die Werte mehrerer voreingestellter Merkmalselemente aus der ersten Überwachungsinformation (5), die Zeitreihendaten enthält, zu erfassen, den Beitrag der erfassten Werte der mehreren Merkmalselemente zu dem Schweißergebnis zu berechnen und die Merkmalsinformation aus den mehreren Merkmalselementen auf der Grundlage des aus den Werten der mehreren Merkmalselemente berechneten Beitrags zu extrahieren und zu bestimmen, und
**dadurch gekennzeichnet, dass**
die mehreren Merkmalselemente die Zeit vom Beginn der Laserbestrahlung bis zu einem ersten Wendepunkt, an dem eine vorbestimmte Laserleistung erreicht wird, und/oder die Zeit vom Beginn der Laserbestrahlung bis zum Beginn des Schmelzens, und/oder die Temperatur, bei der das Schmelzen beginnt, und/oder die Zeit vom Ende der Laserbestrahlung bis zu einem zweiten Wendepunkt, an dem die Temperatur zu fallen beginnt, und/oder die Zeit vom Ende der Laserbestrahlung bis zu einem dritten Wendepunkt, an dem die Verfestigung beginnt, und/oder die Temperatur, bei der die Verfestigung beginnt, und/oder die Zeit vom ersten Wendepunkt bis zum zweiten Wendepunkt, und/oder der Temperaturgradient vom ersten Wendepunkt bis zum zweiten Wendepunkt, und/oder die Zeit vom zweiten Wendepunkt bis zum dritten Wendepunkt, und/oder der Temperaturgradient vom zweiten Wendepunkt bis zum dritten Wendepunkt, und/oder die Gesamttemperatur während der Laserleistung sind.

2. Schweißsystem (100A), mit:
einem Widerstandsschweißgerät (41), das zum Schweißen eines zu bearbeitenden Objekts ausgebildet ist;
einem Sensor (212);
einer Schweißüberwachungsvorrichtung (51), die ausgebildet ist, den Sensor (212) zu verwenden, um den Fortschritt des durch das Widerstandsschweißgerät (41) erfolgten Schweißens zu überwachen und eine erste Überwachungsinformation (5) und eine zweite Überwachungsinformation (6) auszugeben;
einer Lernvorrichtung (10), das ausgebildet ist, die Eingabe einer Schweißergebnisinformation (1), die mit den nach dem Schweißen durch das Widerstandsschweißgerät (41) erhaltenen Schweißergebnissen im Zusammenhang steht, und einer Merkmalsinformation, die aus der ersten Überwachungsinformation (5) zum Zeitpunkt des Schweißens extrahiert wird, als Lehrdaten zu akzeptieren und auf der Grundlage der Lehrdaten ein Schweißergebnis-Schätzmodell (3) zu erstellen und auszugeben; und
einer Schweißergebnis-Bestimmungsvorrichtung (20), die ausgebildet ist, eine Merkmalsinformation aus der zweiten Überwachungsinformation (6) zu extrahieren, die von der Schweißüberwachungsvorrichtung (51) zum Zeitpunkt des Schweißens ausgegeben wird, für das ein Schweißergebnis zu bestimmen ist, die Merkmalsinformation als Daten für die Schätzung in das von der Lernvorrichtung (10) erstellte Schweißergebnis-Schätzmodell (3) einzugeben und ein Qualitätsbestimmungsergebnis für das Schweißen auszugeben, wobei die Lernvorrichtung (10) ausgebildet ist, die Werte mehrerer voreingestellter Merkmalselemente aus der ersten Überwachungsinformation (5), die Zeitreihendaten enthält, zu erfassen, den Beitrag der erfassten Werte der mehreren Merkmalselemente zum Schweißergebnis zu berechnen und die Merkmalsinformation aus den mehreren Merkmalselementen auf der Grundlage des aus den Werten der mehreren Merkmalselemente berechneten Beitrags zu extrahieren und zu bestimmen, und
**dadurch gekennzeichnet, dass**
die mehreren Merkmalselemente die Zeit vom Beginn der Energiezufuhr bis zu einem ersten Wendepunkt, an dem ein vorbestimmter Schweißstrom/eine vorbestimmte Schweißspannung erreicht wird, und/oder die Zeit vom Beginn der Energiezufuhr bis zum Beginn der Verschmelzung, und/oder die Temperatur, bei der die Verschmelzung beginnt, und/oder die Zeit vom Ende der Energiezufuhr bis zu einem zweiten Wendepunkt, an dem die Temperatur zu fallen beginnt, und/oder die Zeit vom Ende der Energiezufuhr bis zu einem dritten Wendepunkt, an dem die Verfestigung beginnt, und/oder die Temperatur, bei der die Verfestigung beginnt, und/oder die Zeit vom ersten Wendepunkt bis zum zweiten Wendepunkt, und/oder der Temperaturgradient vom ersten Wendepunkt bis zum zweiten Wendepunkt, und/oder die Zeit vom zweiten Wendepunkt bis zum dritten Wendepunkt, und/oder der Temperaturgradient vom zweiten Wendepunkt bis zum dritten Wendepunkt, und/oder die Gesamttemperatur während der Energiezufuhr sind.

3. Schweißsystem (100, 100A) gemäß Anspruch 1 oder 2, wobei
die Schweißergebnis-Bestimmungsvorrichtung (20) eine Berichtseinheit aufweist, die ausgebildet ist, das Qualitätsbestimmungsergebnis auf mindestens eine sichtbare oder hörbare Weise zu melden, und
das Qualitätsbestimmungsergebnis eine Information, die sich auf die Schweißfestigkeit der Schweißung bezieht, und/oder eine Information bezüglich Ursache enthält.

4. Schweißsystem (100) gemäß Anspruch 1, wobei
die in die Lernvorrichtung (10) eingegebenen Lehrdaten und die in die Schweißergebnis-Bestimmungsvorrichtung (20) eingegebenen Schätzdaten eine Information zu den Verarbeitungsbedingungen (2, 4) umfassen,
die Information zu den Verarbeitungsbedingungen (2, 4) mindestens eine der folgenden Verarbeitungsbedingungen umfasst: Material des zu bearbeitenden Objekts, Dicke des zu bearbeitenden Objekts, Laserleistung, Laserbestrahlungszeit, Zeit vom Beginn der Laserbestrahlung bis zum Erreichen der Spitzenleistung, Zeit von der Spitzenleistung bis zum Ende der Laserbestrahlung, Faserdurchmesser, Brennweite der Linse, Brennpunktposition und Laserdurchmesser des bestrahlten Punktes, und
die Überwachungsinformation (5, 6) Zeitreihenvariationsdaten zur Laserleistung und Zeitreihenvariationsdaten zur emittierten Nahinfrarotlichtintensität am bestrahlten Punkt enthält.

5. Schweißsystem (100A) gemäß Anspruch 2, wobei
die in die Lernvorrichtung (10) eingegebenen Lehrdaten und die in die Schweißergebnis-Bestimmungsvorrichtung (20) eingegebenen Schätzdaten eine Information zu Verarbeitungsbedingungen (2, 4) enthalten,
wobei die Information zu Verarbeitungsbedingungen (2, 4) mindestens eine der folgenden Verarbeitungsbedingungen umfasst: Schweißstrom, ausgeübter Schweißdruck, Energiezufuhrzeit, Schweißverfahren, Material des zu bearbeitenden Objekts, Dicke des zu bearbeitenden Objekts, Oberflächenbehandlung des zu bearbeitenden Objekts, Montagebedingungen des zu bearbeitenden Objekts, Abtastzyklus, Verschiebungserkennungsauflösung und Kern-Durchmesser, und
die Überwachungsinformation (5, 6) Zeitreihenvariationsdaten zu Schweißstrom/-spannung und Zeitreihenvariationsdaten zu aufgebrachtem Druck/Verschiebung des Schweißpunkts enthalten.

6. Schweißergebnis-Bestimmungsvorrichtung (20), die ausgebildet ist zum:
Erhalten, von einer Schweißüberwachungsvorrichtung (50), der Eingabe einer ersten Überwachungsinformation (5), die unter Verwendung eines Sensors (212) zum Überwachen des Schweißfortschritts durch einen Laserschweißgerät (40), das zum Schweißen eines zu bearbeitenden Objekts ausgebildet ist, erhalten wird;
Verwenden eines Schweißergebnis-Schätzmodells (3), das unter Verwendung einer Schweißergebnisinformation, die mit Schweißergebnissen im Zusammenhang steht, die nach dem Schweißen durch den Laserschweißgerät (40) erhalten werden, und einer Merkmalsinformation, die aus der ersten Überwachungsinformation (5) zum Zeitpunkt des Schweißens extrahiert wird, als Lehrdaten erstellt wurde; und
Extrahieren einer Merkmalsinformation aus der zweiten Überwachungsinformationen (6), die von der Schweißüberwachungsvorrichtung (50) zum Zeitpunkt des Schweißens, für das ein Schweißergebnis zu bestimmen ist, extrahiert wird, Eingeben der Merkmalsinformation als Daten für die Schätzung in das Schweißergebnis-Schätzmodell (3) und Ausgeben eines Qualitätsbestimmungsergebnisses für das Schweißen, wobei das Schweißergebnis-Schätzmodell (3) dazu gestaltet ist, die Werte mehrerer voreingestellter Merkmalselemente aus der ersten und der zweiten Überwachungsinformation (5, 6), die Zeitreihendaten enthalten, zu erfassen, den Beitrag der erfassten Werte der mehreren Merkmalselemente zum Schweißergebnis zu berechnen und die Merkmalsinformation aus den mehreren Merkmalselementen auf der Grundlage des aus den Werten der mehreren Merkmalselemente berechneten Beitrags zu extrahieren und zu bestimmen, und
**dadurch gekennzeichnet, dass**
die mehreren Merkmalselemente die Zeit vom Beginn der Laserbestrahlung bis zu einem ersten Wendepunkt, an dem eine vorbestimmte Laserleistung erreicht wird, und/oder die Zeit vom Beginn der Laserbestrahlung bis zum Beginn des Schmelzens, und/oder die Temperatur, bei der das Schmelzen beginnt, und/oder die Zeit vom Ende der Laserbestrahlung bis zu einem zweiten Wendepunkt, an dem die Temperatur zu fallen beginnt, und/oder die Zeit vom Ende der Laserbestrahlung bis zu einem dritten Wendepunkt, an dem die Verfestigung beginnt, und/oder die Temperatur, bei der die Verfestigung beginnt, und/oder die Zeit vom ersten Wendepunkt bis zum zweiten Wendepunkt, und/oder der Temperaturgradient vom ersten Wendepunkt bis zum zweiten Wendepunkt, und/oder die Zeit vom zweiten Wendepunkt bis zum dritten Wendepunkt, und/oder der Temperaturgradient vom zweiten Wendepunkt bis zum dritten Wendepunkt, und/oder die Gesamttemperatur während der Laserleistung sind.

7. Schweißergebnis-Bestimmungsvorrichtung (20), die ausgebildet ist zum:
Erhalten, von einer Schweißüberwachungsvorrichtung (51), der Eingabe einer ersten Überwachungsinformation (5), die unter Verwendung eines Sensors (212) zum Überwachen des Schweißfortschritts durch ein Widerstandsschweißgerät (41), das zum Schweißen eines zu bearbeitenden Objekts ausgebildet ist, erhalten wird;
Verwenden eines Schweißergebnis-Schätzmodells (3), das unter Verwendung einer Schweißergebnisinformation, die mit Schweißergebnissen im Zusammenhang steht, die nach dem Schweißen durch das Widerstandsschweißgerät (41) erhalten werden, und einer Merkmalsinformation, die aus der ersten Überwachungsinformation (5) zum Zeitpunkt des Schweißens extrahiert wird, als Lehrdaten erstellt wurde; und
Extrahieren einer Merkmalsinformation aus der zweiten Überwachungsinformation (6), die von der Schweißüberwachungsvorrichtung (51) zum Zeitpunkt des Schweißens, für das ein Schweißergebnis zu bestimmen ist, ausgegeben wird, Eingeben der Merkmalsinformation als Daten für die Schätzung in das Schweißergebnis-Schätzmodell (3) und Ausgeben eines Qualitätsbestimmungsergebnisses für das Schweißen, wobei das Schweißergebnis-Schätzmodell (3) ausgebildet ist, die Werte mehrerer voreingestellter Merkmalselemente aus der ersten und der zweiten Überwachungsinformation (5, 6), die Zeitreihendaten enthalten, zu erfassen, den Beitrag der erfassten Werte der mehreren Merkmalselemente zum Schweißergebnis zu berechnen und die Merkmalsinformation aus den mehreren Merkmalselementen auf der Grundlage des aus den Werten der mehreren Merkmalselemente berechneten Beitrags zu extrahieren und zu bestimmen, und
**dadurch gekennzeichnet, dass**
die mehreren Merkmalselemente die Zeit vom Beginn der Energiezufuhr bis zu einem ersten Wendepunkt, an dem ein/eine vorbestimmter/vorbestimmte Schweiß-Strom/Spannung erreicht wird, und/oder die Zeit vom Beginn der Energiezufuhr bis zum Beginn der Verschmelzung, und/oder die Temperatur, bei der die Verschmelzung beginnt, und/oder die Zeit vom Ende der Energiezufuhr bis zu einem zweiten Wendepunkt, an dem die Temperatur zu fallen beginnt, und/oder die Zeit vom Ende der Energiezufuhr bis zu einem dritten Wendepunkt, an dem die Verfestigung beginnt, und/oder die Temperatur, bei der die Verfestigung beginnt, und/oder die Zeit vom ersten Wendepunkt bis zum zweiten Wendepunkt, und/oder der Temperaturgradient vom ersten Wendepunkt zum zweiten Wendepunkt, und/oder die Zeit vom zweiten Wendepunkt zum dritten Wendepunkt, und/oder der Temperaturgradient vom zweiten Wendepunkt zum dritten Wendepunkt, und/oder die Gesamttemperatur während der Energiezufuhr sind.

## Revendications

1. Système de soudage (100) comprenant:
un outil de soudage laser (40) configuré pour souder un objet à usiner;
un capteur (212);
un dispositif de surveillance du soudage (50) configuré pour utiliser le capteur (212) afin de surveiller la progression du soudage par l'outil de soudage laser (40) et pour fournir des premières informations de surveillance (5) et des deuxièmes informations de surveillance obtenues;
un dispositif d'apprentissage (10) configuré pour accepter la saisie d'informations de résultat de soudage (1) associées aux résultats de soudage obtenus après le soudage par l'outil de soudage laser (40) et d'informations de caractéristiques extraites des premières informations de surveillance (5) au moment du soudage lorsque les résultats de soudage ont été obtenus en tant que données d'apprentissage, et pour créer et fournir un modèle d'estimation de résultat de soudage (3) sur la base des données d'apprentissage; et
un dispositif de détermination des résultats de soudage (20) configuré pour extraire des informations caractéristiques à partir des deuxièmes informations de surveillance (6) produites par le dispositif de surveillance de soudage (50) au moment du soudage pour lequel un résultat de soudage doit être déterminé, pour entrer les informations caractéristiques en tant que données d'estimation dans le modèle d'estimation des résultats de soudage (3) créé par le dispositif d'apprentissage (10), et pour produire un résultat de détermination de la qualité du soudage,
dans lequel
le dispositif d'apprentissage (10) est configuré pour détecter les valeurs d'une pluralité prédéfinie d'éléments caractéristiques à partir des premières informations de surveillance (5) qui comprennent des données chronologiques, calculer la contribution des valeurs détectées de la pluralité d'éléments caractéristiques au résultat de soudage, et extraire et déterminer les informations caractéristiques à partir de la pluralité d'éléments caractéristiques sur la base de la contribution calculée à partir des valeurs de la pluralité d'éléments caractéristiques, et est **caractérisé en ce que**
la pluralité d'éléments caractéristiques comprend au moins l'un des éléments suivants: le temps écoulé entre le début de l'irradiation laser et un premier point d'inflexion auquel une puissance laser prédéterminée est atteinte, le temps écoulé entre le début de l'irradiation laser et le début de la fusion, la température à laquelle la fusion commence, le temps écoulé entre la fin de l'irradiation laser et un deuxième point d'inflexion auquel la température commence à baisser, le temps entre la fin de l'irradiation laser et un troisième point d'inflexion auquel la solidification commence, la température à laquelle la solidification commence, le temps entre le premier point d'inflexion et le deuxième point d'inflexion, le gradient de température entre le premier point d'inflexion et le deuxième point d'inflexion, le temps entre le deuxième point d'inflexion et le troisième point d'inflexion, le gradient de température entre le deuxième point d'inflexion et le troisième point d'inflexion, et la température totale pendant l'irradiation laser

2. Système de soudage (100A) comprenant:
un appareil de soudage par résistance (41) configuré pour souder un objet à usiner;
un capteur (212);
un dispositif de surveillance du soudage (51) configuré pour utiliser le capteur (212) afin de surveiller la progression du soudage par l'appareil de soudage par résistance (41) et pour fournir des premières informations de surveillance (5) et des deuxièmes informations de surveillance (6) obtenues;
un dispositif d'apprentissage (10) configuré pour accepter la saisie d'informations de résultat de soudage (1) associées aux résultats de soudage obtenus après le soudage par l'appareil de soudage par résistance (41) et d'informations de caractéristiques extraites des premières informations de surveillance (5) au moment du soudage lorsque les résultats de soudage ont été obtenus en tant que données d'apprentissage, et pour créer et fournir un modèle d'estimation de résultat de soudage (3) sur la base des données d'apprentissage; et
un dispositif de détermination des résultats de soudage (20) configuré pour extraire des informations caractéristiques à partir des deuxièmes informations de surveillance (6) produites par le dispositif de surveillance de soudage (51) au moment du soudage pour lequel un résultat de soudage doit être déterminé, pour entrer les informations caractéristiques en tant que données d'estimation dans le modèle d'estimation des résultats de soudage (3) créé par le dispositif d'apprentissage (10), et pour produire un résultat de détermination de la qualité du soudage,
dans lequel
le dispositif d'apprentissage (10) est configuré pour détecter les valeurs d'une pluralité prédéfinie d'éléments caractéristiques à partir des premières informations de surveillance (5) qui comprennent des données chronologiques, calculer la contribution des valeurs détectées de la pluralité d'éléments caractéristiques au résultat de soudage, et extraire et déterminer les informations caractéristiques à partir de la pluralité d'éléments caractéristiques sur la base de la contribution calculée à partir des valeurs de la pluralité d'éléments caractéristiques, et **caractérisé en ce que**
la pluralité d'éléments caractéristiques comprend au moins l'un parmi le temps écoulé entre le début de l'alimentation électrique et un premier point d'inflexion auquel un courant/une tension de soudage prédéterminé(e) est atteint(e), le temps écoulé entre le début de l'alimentation électrique et le début de la fusion, la température à laquelle la fusion commence, le temps écoulé entre la fin de l'alimentation électrique et un deuxième point d'inflexion auquel la température commence à baisser, le temps entre la fin de l'alimentation électrique et un troisième point d'inflexion auquel la solidification commence, la température à laquelle la solidification commence, le temps entre le premier point d'inflexion et le deuxième point d'inflexion, le gradient de température entre le premier point d'inflexion et le deuxième point d'inflexion, le temps entre le deuxième point d'inflexion et le troisième point d'inflexion, le gradient de température entre le deuxième point d'inflexion et le troisième point d'inflexion, et la température totale pendant l'alimentation électrique.

3. Système de soudage (100, 100A) selon les revendications 1 ou 2, dans lequel
le dispositif de détermination du résultat de soudage (20) comprend une unité de rapport configurée pour rapporter le résultat de la détermination de la qualité d'une manière visible ou audible, et
le résultat de la détermination de la qualité comprend au moins une information relative à la résistance de la soudure ou une information sur la cause.

4. Système de soudage (100) selon la revendication 1, dans lequel
les données d'apprentissage entrées dans le dispositif d'apprentissage (10) et les données d'estimation entrées dans le dispositif de détermination du résultat de soudage (20) comprennent des informations sur les conditions de traitement (2, 4),
les informations sur les conditions de traitement (2, 4) comprennent au moins l'une des conditions de traitement suivantes: matériau de l'objet à usiner, épaisseur de l'objet à usiner, puissance du laser, durée d'irradiation du laser, temps écoulé entre le début de l'irradiation du laser et l'atteinte de la puissance maximale, temps écoulé entre la puissance maximale et la fin de l'irradiation du laser, diamètre de la fibre, distance focale de la lentille, position focale et diamètre du laser du point irradié, et
les informations de surveillance (5, 6) comprennent des données de variation temporelle de la puissance laser et des données de variation temporelle de l'intensité de la lumière infrarouge proche émise au point irradié.

5. Système de soudage (100A) selon la revendication 2, dans lequel
les données d'apprentissage entrées dans le dispositif d'apprentissage (10) et les données d'estimation entrées dans le dispositif de détermination du résultat de soudage (20) comprennent des informations sur les conditions de traitement (2, 4), les informations sur les conditions de traitement (2, 4) comprennent au moins l'une des conditions de traitement suivantes: le courant de soudage, la pression de soudage appliquée, le temps d'activation, le procédé de soudage, le matériau de l'objet à usiner, l'épaisseur de l'objet à usiner, le traitement de surface de l'objet à usiner, les conditions d'assemblage de l'objet à usiner, le cycle d'échantillonnage, la résolution de détection de déplacement et le diamètre du noyau, et
les informations de surveillance (5, 6) comprennent des données de variation temporelle du courant/de la tension de soudage et des données de variation temporelle de la pression appliquée/du déplacement du point de soudage.

6. Dispositif de détermination du résultat de soudage (20) configuré pour:
accepter, à partir d'un dispositif de surveillance de soudage (50), la saisie de premières informations de surveillance (5) obtenues à l'aide d'un capteur (212) pour surveiller la progression du soudage par un outil de soudage laser (40) configuré pour souder un objet à usiner;
utiliser un modèle d'estimation des résultats de soudage (3) créé à l'aide d'informations sur les résultats de soudage associées aux résultats de soudage obtenus après le soudage par l'outil de soudage laser (40) et d'informations caractéristiques extraites des premières informations de surveillance (5) au moment du soudage lorsque les résultats de soudage ont été obtenus comme données d'apprentissage; et
extraire des informations caractéristiques à partir des deuxièmes informations de surveillance (6) émises par le dispositif de surveillance de soudage (50) au moment du soudage pour lequel un résultat de soudage doit être déterminé, entrer les informations caractéristiques en tant que données d'estimation dans le modèle d'estimation des résultats de soudage (3), et émettre un résultat de détermination de la qualité du soudage,
dans lequel
le modèle d'estimation du résultat de soudage (3) est configuré pour détecter les valeurs d'une pluralité prédéfinie d'éléments caractéristiques à partir des première et deuxième informations de surveillance (5, 6) qui comprennent des données chronologiques, calculer la contribution des valeurs détectées de la pluralité d'éléments caractéristiques au résultat de soudage, et extraire et déterminer les informations caractéristiques à partir de la pluralité d'éléments caractéristiques sur la base de la contribution calculée à partir des valeurs de la pluralité d'éléments caractéristiques, et
**caractérisé en ce que**
la pluralité d'éléments caractéristiques comprend au moins l'un parmi le temps écoulé entre le début de l'irradiation laser et un premier point d'inflexion auquel une puissance laser prédéterminée est atteinte, le temps écoulé entre le début de l'irradiation laser et le début de la fusion, la température à laquelle la fusion commence, le temps écoulé entre la fin de l'irradiation laser et un deuxième point d'inflexion auquel la température commence à baisser, le temps écoulé entre la fin de l'irradiation laser et un troisième point d'inflexion auquel la solidification commence, la température à laquelle la solidification commence, le temps écoulé entre le premier point d'inflexion et le deuxième point d'inflexion, le gradient de température entre le premier point d'inflexion et le deuxième point d'inflexion, le temps écoulé entre le deuxième point d'inflexion et le troisième point d'inflexion, le gradient de température entre le deuxième point d'inflexion et le troisième point d'inflexion, et la température totale pendant l'irradiation laser.

7. Dispositif de détermination du résultat de soudage (20) configuré pour:
accepter, à partir d'un dispositif de surveillance de soudage (51), la saisie de premières informations de surveillance (5) obtenues à l'aide d'un capteur (212) pour surveiller la progression du soudage par un appareil de soudage par résistance (41) configuré pour souder un objet à usiner;
utiliser un modèle d'estimation des résultats de soudage (3) créé à l'aide d'informations sur les résultats de soudage associées aux résultats de soudage obtenus après le soudage par l'appareil de soudage par résistance (41) et d'informations caractéristiques extraites des premières informations de surveillance (5) au moment du soudage lorsque les résultats de soudage ont été obtenus comme données d'apprentissage; et
extraire des informations caractéristiques à partir des deuxièmes informations de surveillance (6) émises par le dispositif de surveillance de soudage (51) au moment du soudage pour lequel un résultat de soudage doit être déterminé, entrer les informations caractéristiques en tant que données d'estimation dans le modèle d'estimation des résultats de soudage (3), et émettre un résultat de détermination de la qualité du soudage,
de sorte que
le modèle d'estimation des résultats de soudage (3) est configuré pour détecter les valeurs d'une pluralité prédéfinie d'éléments caractéristiques à partir des première et deuxième informations de surveillance (5, 6) qui comprennent des données chronologiques, calculer la contribution des valeurs détectées de la pluralité d'éléments caractéristiques au résultat de soudage, et extraire et déterminer les informations caractéristiques à partir de la pluralité d'éléments caractéristiques sur la base de la contribution calculée à partir des valeurs de la pluralité d'éléments caractéristiques, et
**caractérisé en ce que**
la pluralité d'éléments caractéristiques comprend au moins l'un parmi le temps écoulé entre le début de l'alimentation électrique et un premier point d'inflexion auquel un courant/une tension de soudage prédéterminé(e) est atteint(e), le temps écoulé entre le début de l'alimentation électrique et le début de la fusion, la température à laquelle la fusion commence, le temps écoulé entre la fin de l'alimentation électrique et un deuxième point d'inflexion auquel la température commence à baisser, le temps entre la fin de l'alimentation électrique et un troisième point d'inflexion auquel la solidification commence, la température à laquelle la solidification commence, le temps entre le premier point d'inflexion et le deuxième point d'inflexion, le gradient de température entre le premier point d'inflexion et le deuxième point d'inflexion, le temps entre le deuxième point d'inflexion et le troisième point d'inflexion, le gradient de température entre le deuxième point d'inflexion et le troisième point d'inflexion, et la température totale pendant l'alimentation électrique.
